Europäisches Patentamt

European Patent Office

Office européen des brevets

(19)

(11) Publication number: **0 283 701**
**A1**

## EUROPEAN PATENT APPLICATION

(12)

(21) Application number: 88102016.8

(22) Date of filing: **11.02.88**

(51) Int. Cl.⁴: **A01C 11/00**

(30) Priority: **04.03.87 FI 870963**

(43) Date of publication of application:
**28.09.88 Bulletin 88/39**

(84) Designated Contracting States:
**AT BE CH DE ES FR GB IT LI NL SE**

(71) Applicant: **LÄNNEN TEHTAAT OY**

**SF-27820 Iso-Vimma(FI)**

(72) Inventor: **Häkli, Reijo**
**Puhosranta 9**
**SF-27820 Iso-Vimma(FI)**

(74) Representative: **Nöth, Heinz, Dipl.-Phys. et al**
**Patentanwälte Pfenning, Meinig & Partner**
**Mozartstrasse 17**
**D-8000 München 2(DE)**

(54) Method and device for the planting of plants.

(57) Method for the planting of plants, wherein a furrow is formed by means of a plowshare (1) and plants are dropped into the furrow. In the method, the plant is supported at the landing stage by means of a rearwardly directed liquid or gas jet (10) so as to prevent tilting of the plant forwards.

Fig. 1

EP 0 283 701 A1

## Method and device for the planting of plants

This invention relates to mechanized planting of plants. Especially it relates to supporting of plant at the landing stage.

Several types of planting machines are known in which there are means for letting the plant to fall into a furrow made by a plowshare. A common problem in these machines is how to ensure that the plant is set in vertical position in the furrow. The plant tends especially to tilt forwards when hitting the ground.

Finnish Patent No. 65154 of Lännen Tehtaat Oy (corresponding to U.S. Patent 4 106 415) relates to a machine in which there is a pair of endless belts provided with flexible wires which support the plant and hold it in vertical position in the furrow.

Now a method and device have been invented in which the plant is supported at the landing stage by means of a fluid jet directed rearwards.

The fluid is preferably liquid, expecially water. According to one embodiment, compressed gas, especially air is used. Fertilizers or plant-protective agents can be added into the fluid.

The jet is preferably directed straight rearwards. The plant can be additionally supported by jets from the sides. Especially the plant can be additionally supported from the sides as it is falling to its planting point.

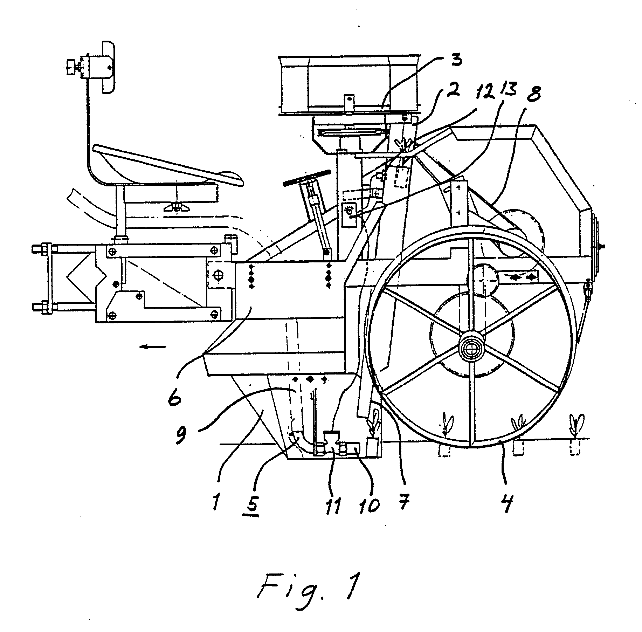

An embodiment of the invention will be described in the following in more detail. The Figure 1 related to the description illustrates a planting machine used for carrying out the method.

The main components of the planting machine shown in Fig. 1 are the plowshare 1, the plant feed pipe 2, the plant feed table 3, the compacting wheels 4, and the water-jet equipment 5. All the components are mounted on a frame 6 to be connected to a tractor vehicle.

When plants are being planted, the machine moves in the direction shown by the arrow in Fig. 1. The share 1 plows a furrow with plane bottom into the ground.

The feed pipe 2 is fitted to pass the plant to be planted into the furrow formed by the share 1. The feed pipe is inclined slightly rearwards (about 4...12°), and the lower end 7 of the pipe is open at the rear.

Above the feed pipe 2, there is the plant feed table 6. It is a so-called roulette table, which, when it revolves, makes the plants placed on its circumference fall into the feed pipe.

After the plant has fallen down into the furrow, the furrow, which is closed after the share, encloses the plant in the ground. The planted line of plants is further compacted from both sides by means of compacting wheels 4.

The operating power for the feed table 6 is taken from the compacting wheels 4 by means of a power transmission equipment 8. Thus, the speed of movement of the feed table depends on the speed of progress of the planting machine, and the plants fall down into the ground as uniformly spaced.

When the plant reaches the ground, it has a speed component in the direction of progress of the machine, which said component attempts to tilt the plant forwards. In order to prevent tilting of the plant, the planting machine is provided with a water jet equipment 5, by means of which a water jet of a direction opposite to the direction of progress is directed at the plant that fell down onto the ground. The jet provides the supporting force necessary to keep the plant upright.

The water pipe 9 of the water jet equipment 5 is connected via a pump to a water tank (not shown in the figure). The lower end of the water pipe is placed between the share 1 in the furrow formed ahead of the feed pipe 2. At the lower end of the water pipe, there is a shaped nozzle 10, which opens perpendicularly to the rear.

The nozzle 10 is connected with a magnetic closing valve 11. The operation of the valve is controlled by means of a detector 12 placed in the pipe 2 so that a water jet of desired duration is obtained exactly when the plant is placed facing the opening of the nozzle and when the bottom part of the plant ball contacts the ground. The detector may be, e.g., a photocell.

The force of the water jet can be adjusted by means of the pump by varying the pressure. In this way, when planting, it is possible to use plants of different sizes and different planting speeds.

Further, between the detector 12 and the magnetic closing valve 11, there is a regulator 13, by means of which the time that the valve remains open can be adjusted continuously.

The nozzle 10 can be replaced so that it is always suitable for each particular plant ball.

Besides supporting the plant at the planting stage, the water that is sprayed also functions as watering water which helps the roots of the plant to be fixed in the soil and to start growing as soon as possible. In this way, economies are also obtained in respect of watering water, and water does not unnecessarily promote the growth of weed in areas between the plants.

To the water to be sprayed, it is possible to add fertilizers as well as plant-protective agents intended to immediate proximity of the plant, which substances can thereby also be applied exactly to the correct locations.

According to an embodiment, a compressed-air jet is used in stead of a water jet. In such a case, along with the compressed air, it is advantageous to use fertilizers or protective agents, in particular granular fertilizers.

The feed pipe of the planting machine may also be placed vertically, or the pipe may be curved.

In stead of a pump and a water tank, it is possible to use a pressurized water tank.

## Claims

1. Method for the planting of plants, wherein
- a furrow is formed into the ground by means of a share (1) that travels forwards,
- a plant is made to fall into the furrow from a planting member (2) travelling along with the share, and
- the plant is supported at the landing stage so as to prevent its tilting forwards,
**characterized** in that
- the plant is supported at the landing stage by means of a fluid jet directed rearwards.

2. Method as claimed in claim 1, **characterized** in that the plant is supported by means of a fluid jet into which fertilizer or plant-protective agents have been mixed.

3. Method as claimed in claim 1 or 2, **characterized** in that the plant is supported by means of a jet directed straight rearwards.

4. Machine for the planting of plants, which comprises
- a share (1) which travels forwards for the formation of a furrow into the ground,
- a planting member (2) travelling along with the share for making a plant fall down into the furrow, and
- supporting means for supporting the plant when it reaches the ground,
**characterized** in that the supporting means comprise
- a fluid tank,
- between the share, ahead of the place where the plant falls onto the ground, a rearwardly opening nozzle (10), and
- means (9) for passing the fluid from the tank through the nozzle towards the place where the plant falls onto the ground.

5. Machine as claimed in claim 4, **characterized** in that the pipe (9) or the nozzle (10) is provided with a closing valve (11).

6. Machine as claimed in claim 5, **characterized** in that the valve (11) is connected to a detector (12) provided in the planting member and giving the closing valve a signal when a plant falls and by-passes the detector, and that the valve is adjusted so that it is opened, on the basis of the signal received by it, exactly when the plant falls down onto the bottom of the furrow and that it is closed after a desired period of time before the next plant falls.

7. Machine as claimed in claims 5 or 6, **characterized** in that the nozzle (10) can be replaced.

8. Planting machine as claimed in any of the claims 5 to 7, **characterized** in that the closing valve is a magnetic valve (11).

9. Planting machine as claimed in any of the claims 5 to 8, **characterized** in that between the detector (12) and the closing valve (11), there is a regulator (13) for the time that the valve remains open.

10. Method for supporting the plant to be planted in the vertical position as the plant is made to fall down to its planting point, **characterized** in that the plant is supported from the sides by means of liquid or gas jets.

Fig. 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | DE-A-3 032 368 (L. VON EHREN)<br>* claims 1,4,5 * | 4,5,7-9 | A 01 C 11/00 |
| A | | 1,2 | |
| A | US-A-4 186 671 (HUANG)<br>* claim 2 * | 1,6 | |
| A | US-A-2 751 865 (HOREY)<br>* claims 1,2 * | 1,6 | |
| A | DE-A-3 445 357 (BUDAPESTI VEGYIMÜVEK)<br>* whole document * | 2 | |

TECHNICAL FIELDS
SEARCHED (Int. Cl.4)

A 01 C 11/00
A 01 B 49/00

The present search report has been drawn up for all claims

| Place of search | Date of completion of the search | Examiner |
|---|---|---|
| BERLIN | 01-06-1988 | SAMWEL P.N. |